# EUROPEAN PATENT SPECIFICATION

(11) **EP 2 625 619 B1**
(45) Date of publication and mention of the grant of the patent: **29.04.2015**
(21) Application number: 11773154.7
(22) Date of filing: 10.10.2011
(51) Int. Cl.: G06F 13/362

(54) **ARBITRATING STREAM TRANSACTIONS BASED ON INFORMATION RELATED TO THE STREAM TRANSACTION(S)**
ARBITRIERUNG VON STREAM-TRANSAKTIONEN AUF DER BASIS VON INFORMATIONEN IM ZUSAMMENHANG MIT DEN STREAM-TRANSAKTIONEN
ARBITRAGE DE TRANSACTIONS DE FLUX DE DONNÉES SUR LA BASE D'INFORMATIONS RELATIVES À LA OU AUX TRANSACTIONS DE FLUX DE DONNÉES

(30) Priority: 08.10.2010 US 900800
(43) Date of publication of application: 14.08.2013
(73) Proprietor: Qualcomm Incorporated, San Diego, CA 92121 (US)
(72) Inventor: SHIRLEN, Martyn, Ryan, San Diego California 92121 (US); HOFMANN, Richard, Gerard, San Diego California 92121 (US); SCHAFFER, Mark, Michael, San Diego California 92121 (US)
(74) Representative: Dunlop, Hugh Christopher
(86) International application number: PCT/US2011/055639
(87) International publication number: WO 2012/048328

(56) References cited:
- WO-A1-2005/099108
- US-A1- 2010 088 443

## Description

### BACKGROUND

### I. Field of the Disclosure

The technology of the disclosure relates generally to arbitration of bus transactions on a communications bus in a processor-based system.

### II. Background

Modem digital systems and processor-based designs typically employ a communications bus. The communications bus is configured to facilitate devices or peripherals, acting as master devices, sending communications to receiving peripherals or devices, acting as slave devices. For example, if a master device desires to send a read request to a slave device, the master device provides control information that includes an address and read command on the communications bus. The communications bus directs the command to the appropriate slave device coupled to the communications bus according to the control information. Further, master and slave devices coupled to the communications bus may be provided along with a communications bus on a single chip to provide a system-on-a-chip (SOC). SOCs are particularly useful in portable electronic devices because of their integration of multiple subsystems that can provide multiple features and applications in a single chip.

An arbiter can be provided for the communications bus to direct or arbitrate bus transactions from master devices to slave devices coupled to the communications bus. Bus arbitration may, for example, prevent bus transaction collisions. For example, a system that includes a computer processing unit (CPU), a digital signal processor (DSP), and direct memory access (DMA) controller coupled to a communications bus may all have access to a shared memory system also coupled to the communications bus. The arbiter arbitrates memory access requests from these devices to the shared memory system so that bus resources are allocated between competing requests from master devices. However, it is desired that the arbiter be configured not to expend routing resources processing requests from one master device on the communications bus that will cause an unacceptable increase in latencies of other requests by other master devices.

In the prior art, document US2010/088443 describes a data processing apparatus including a plurality of requester elements sharing access to a shared resource, and arbitration circuitry which is responsive to requests asserted by requester elements for access to the shared resource. A priority determination operation is performed by the arbitration circuitry to select one of the asserted requests as a winning request.

Document WO2005/099108 describes a communication apparatus including a radio frequency circuit that operates on a radio frequency signal and a digital processing circuit coupled to the radio frequency circuit. The digital processing circuit includes a plurality of bus masters coupled to a shared bus. A bus arbiter is provided for arbitrating between requests to access the bus by a first bus master and one or more other bus masters.

### SUMMARY OF THE DISCLOSURE

Embodiments disclosed in the detailed description include devices, systems, methods, and computer-readable mediums for arbitrating stream transactions based on information related to the stream transactions. A stream transaction is a superset of burst access types to facilitate efficient bulk transfers of data. Information related to a stream transaction is also referred to herein as "stream transaction information." In embodiments disclosed herein, an arbiter is provided that arbitrates bus transactions between a plurality of devices coupled to a bus, which may be an bus interconnect, competing for resources accessible through the bus. To efficiently arbitrate stream transactions requested on the bus, the arbiter is configured to use information related to the stream transactions to provide a view of future bus traffic on the bus. For example, stream transactions may have temporal and/or other priority parameters for completion. The arbiter is configured to use this stream transaction information to evaluate and/or apply bus arbitration policies for arbitrating the stream transactions. In this example, the bus arbitration policy can be adjusted or altered for the stream transactions based on the stream transaction information, if necessary, for the arbiter to attempt to meet the parameter(s) for completing the stream transactions.

In this regard in one embodiment, a bus arbiter is provided. The bus arbiter includes a controller configured to receive a stream transaction(s) on a bus from a device(s) coupled to the bus. The arbiter arbitrates the stream transaction(s) on the bus. To attempt to arbitrate the stream transaction(s) based on a parameter(s) of a device requesting the stream transaction(s), the controller in the arbiter is configured to evaluate a bus arbitration policy(ies) to arbitrate the stream transaction(s) on the bus based on information related to the stream transaction(s). The controller may also be further configured to apply a bus arbitration policy based on the evaluation.

In another embodiment, a method of arbitrating a stream transaction(s) communicated on a bus is provided. The method includes receiving a stream transaction(s) on a bus from a device(s) coupled to the bus. The method also includes evaluating, at a controller configured to arbitrate stream transactions on the bus, a bus arbitration policy for arbitrating the stream transaction(s) on the bus based on information related to the stream transaction(s). The method may also further comprise the controller applying a bus arbitration policy based on the evaluation.

In another embodiment, a computer-readable medium is provided having stored thereon computer-executable instructions to cause an arbiter to receive a stream transaction(s) on a bus from a device(s) coupled to the bus. The computer-executable instructions also cause the arbiter to arbitrate bus traffic for the stream transaction(s) on the bus. The computer-executable instructions also cause the arbiter to evaluate a bus arbitration policy to arbitrate the stream transaction(s) on the bus based on information related to the stream transaction(s). The computer-executable instructions may also cause the arbiter to apply a bus arbitration policy based on the evaluation.

### BRIEF DESCRIPTION OF THE FIGURES

Figure 1 is a block diagram of an exemplary system that includes a bus interconnect and arbiter configured to arbitrate and route transactions between a plurality of master devices and a plurality of slave devices;
Figure 2 is a block diagram of an exemplary stream transaction response from a slave device in response to a stream transaction request from a master device to the slave device;
Figure 3 is a flowchart illustrating an exemplary process of an arbiter evaluating and applying a bus arbitration policy for pending stream transactions based on information related to the pending stream transactions;
Figure 4 is a block diagram of exemplary circuitry subsystems in a communication path between master devices and slave devices in the bus interconnect of Figure 1;
Figure 5 is a block diagram of an exemplary control block for a bus protocol that supports stream transaction information and which can be supported by the bus interconnect of Figure 1 as part of a request communicated on the bus interconnect;
Figure 6 is a block diagram of an exemplary master identification word provided in the exemplary control block of Figure 5 to identify a requesting master device;
Figure 7 is a block diagram of an exemplary stream identifier block provided in the exemplary control block of Figure 5 to support stream transactions on the bus interconnect of Figure 1;
Figure 8 is a diagram of an exemplary slave port queue configured to store pending bus transactions, including the stream identifier block of Figure 7;
Figure 9 is a flowchart illustrating an exemplary process that can be performed by an arbiter to evaluate and apply a bus arbitration policy for a stream transaction based on deadline information association with the stream transaction;
Figure 10 is a flowchart illustrating an exemplary process that can be performed by an arbiter to evaluate and apply a bus arbitration policy when two or more pending stream transactions for a given slave port have associated deadlines;
Figure 11 is a chart illustrating exemplary feasibility factor calculations for exemplary pending deadlined stream transactions; and
Figure 12 is a block diagram of an exemplary processor-based system that can include the bus interconnect of Figure 1.

### DETAILED DESCRIPTION

With reference now to the drawing figures, several exemplary embodiments of the present disclosure are described. The word "exemplary" is used herein to mean "serving as an example, instance, or illustration." Any embodiment described herein as "exemplary" is not necessarily to be construed as preferred or advantageous over other embodiments.

Embodiments disclosed in the detailed description include devices, systems, methods, and computer-readable mediums for arbitrating stream transactions based on information related to the stream transactions. A stream transaction is a superset of burst access types to facilitate efficient bulk transfers of data. Information related to a stream transaction is also referred to herein as "stream transaction information." In embodiments disclosed herein, an arbiter is provided that arbitrates bus transactions between a plurality of devices competing for resources accessible through the bus. To efficiently arbitrate stream transactions requested on the bus, the arbiter is configured to use information related to the stream transactions to provide a view of future bus traffic on the bus. For example, stream transactions may have temporal and/or other priority parameters for completion. The arbiter is configured to use this stream transaction information to evaluate and/or apply bus arbitration policies for arbitrating the stream transactions. In this example, the bus arbitration policy can be adjusted or altered for the stream transactions based on the stream transaction information, if necessary, for the arbiter to attempt to meet the parameter(s) for completing the stream transactions.

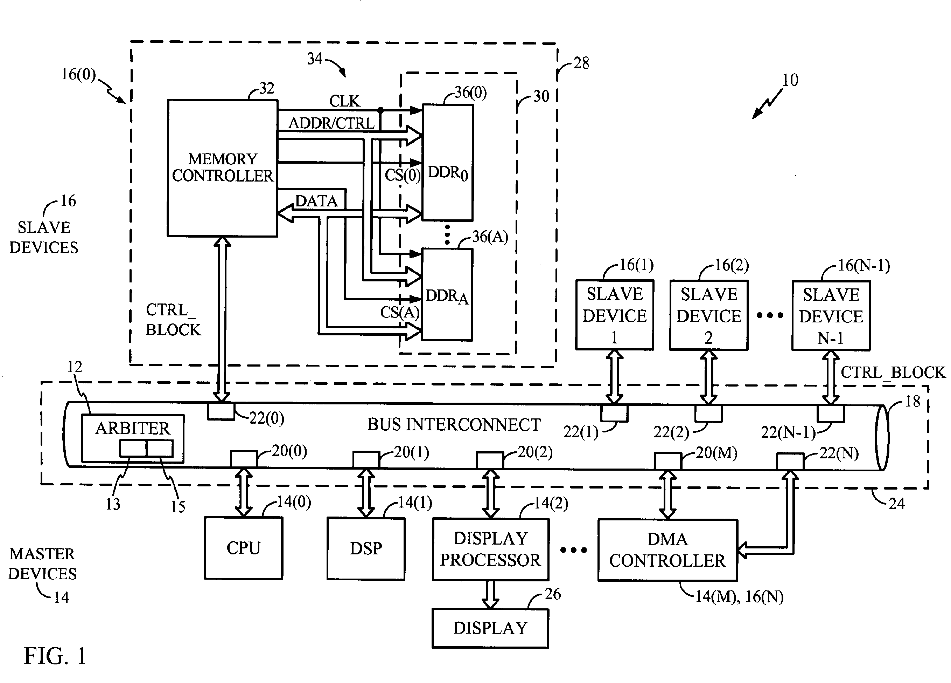

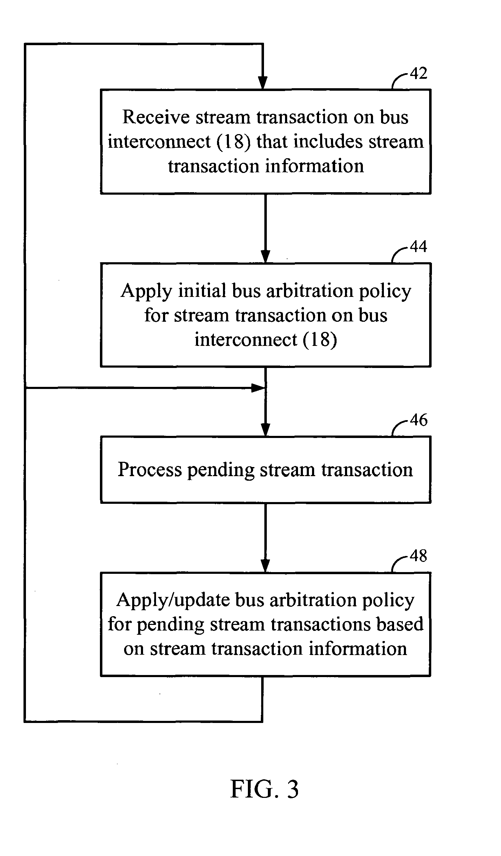

Before discussing examples of evaluating and applying a bus arbitration policy to arbitrate stream transactions based on information related to stream transactions starting at Figure 3, Figures 1 and 2 are first provided and discussed. Figure 1 illustrates an exemplary system 10 that includes an arbiter 12 configured to receive and arbitrate bus transactions, including stream transactions, on a bus interconnect. In this example, a controller 13 is provided in the arbiter 12 that arbitrates the bus transactions. A computer-readable medium 15, such as memory, may be included in the arbiter 12 to store instructions executed by the controller 13 to evaluate and apply bus arbitration polices and arbitrate bus transactions.

The system 10 includes a plurality of master devices 14(0-M) interconnected to one or more slave devices 16(0-N) via a communications bus 18, also referred to herein as "bus interconnect 18." As examples, the bus interconnect 18 may be provided by a field programmable gate array (FPGA), an asynchronous synchronous integrated circuit (ASIC), a controller, micro-controller or microprocessor that may execute software instructions, or any combinations thereof. The arbiter 12 is illustrated in Figure 1 as provided internal to the bus interconnect 18. Alternatively, the arbiter 12 may be provided external to the bus interconnect 18.

The bus interconnect 18 may be configurable to allow one or more of the master devices 14(0-M) connected to the bus interconnect 18 to communicate with some or all of the slave devices 16(0-N) coupled to the bus interconnect 18. In this embodiment, the bus interconnect 18 is configured to allow one or more of the master devices 14(0-M) connected to the bus interconnect 18 to communicate with any of the slave devices 16(0-N) coupled to the bus interconnect 18. However, the bus interconnect 18 could be configured to allow one or more of the master devices 14(0-M) connected to the bus interconnect 18 to communicate with only one or a subset of the slave devices 16(0-N) coupled to the bus interconnect 18. As an example, the bus interconnect 18 may be provided in a semiconductor die 24 and may be provided in a system-on-a-chip (SOC) integrated circuit design, if desired. The master devices 14(0-M) and slave devices 16(0-N) are connected to the bus interconnect 18 via master ports 20(0-M) and slave ports 22(0-N), respectively, provided in the bus interconnect 18 in this example. The arbiter 12 can arbitrate multiple bus transaction requests from the master devices 14(0-M) to the slave devices 16(0-N). The slave devices 16(0-N) may be shared resources to the master devices 14(0-M).

The master devices 14(0-M) and the slave devices 16(0-N) can be any type of electronic device or subsystem desired. As illustrated in Figure 1, the master devices 14(0-M) may be any type of electronic device, including without limitation a central processing unit (CPU) 14(0), digital signal processor (DSP) 14(1), a display processor 14(2) that controls information provided to a display 26, and a direct memory access (DMA) controller 14(M). The DMA controller 14(M) may act as both a master device 14(M) and a slave device 16(N). Another example of a slave device 16(0-N) is a memory system 28, which is also illustrated in Figure 1. The memory system 28 is connected to the bus interconnect 18 to allow any of the master devices 14(0-M) to provide read and write memory access requests to memory 30 in the memory system 28 and to receive read and write responses. In this regard, the memory system 28 includes a memory controller 32 that interfaces the bus interconnect 18 to the memory 30 and controls the flow of data to and from the memory 30 in response to memory access requests provided by the master devices 14(0-M) through the bus interconnect 18 destined for the memory system 28.

Memory access information provided in the form of a control block (CTRL,_BLOCK), as will be discussed in more detail below, is provided to the memory controller 32 to request a memory access transaction to the memory 30. A memory bus 34 is provided to interface the memory 30 to the memory controller 32 that includes chip selects CS(0-A), one for each memory unit 36(0-A) provided. Each memory unit 36(0-A) may be a separate memory chip. The chip selects CS(0-A) are selectively enabled by the memory controller 32 to enable the memory units 36(0-A) containing the desired memory location to be accessed. The memory controller 32 enables one of the memory units 36(0-A) at a time to avoid data collisions.

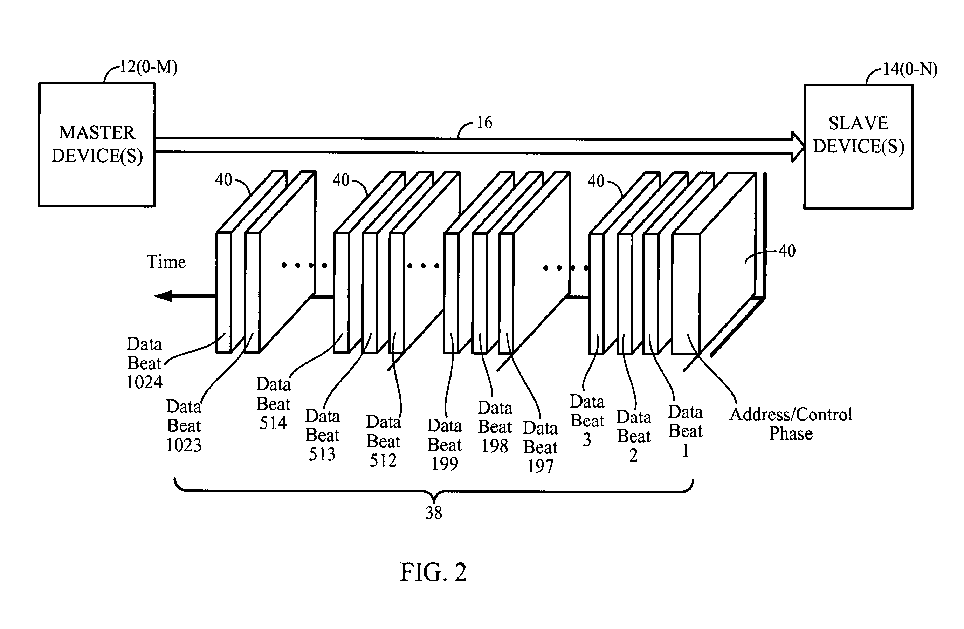

The master devices 14(0-M) in Figure 1 may provide single beat or burst transactions to the bus interconnect 18 to be serviced by the slave devices 16(0-N) connected to the bus interconnect 18. The master devices 14(0-M) in Figure 1 may also provide stream transactions to the bus interconnect 18 to be serviced by the slave devices 16(0-N). Stream transactions may be used to move large amounts of data efficiently. A stream transaction may consist of a superset of bursts to provide for larger amounts of data to be transferred as part of a single transaction request. An example of a stream transaction is illustrated in Figure 2. In this example in Figure 2, there are two hundred fifty-six (256) bursts of data, where each burst is comprised of four (4) data beats. The slave devices 16(0-N) provide a stream of data 38 comprised of a superset of burst data transactions 40 on the bus interconnect 18 in response to stream transactions previously requested by the master devices 14(0-M) to the slave devices 16(0-N). For example, the master device 14(0-M) in this example may be the DMA controller 14(M) in Figure 1 configured to receive and transfer large amounts of data from the memory system 28 to other devices coupled to the DMA controller 14(M).

Because a stream transaction can move large amounts of data over the bus interconnect 18 over a longer period of time than burst and data beat transactions, routing the stream transaction may introduce a delay in servicing other bus transactions. Thus, to efficiently arbitrate stream transactions on the bus interconnect 18 without unduly causing other bus transactions to violate a latency parameter(s) desired by their requesting master devices 14(0-M), embodiments provided herein allow the arbiter 12 to evaluate bus arbitration policies for arbitrating the stream transactions on the bus interconnect 18 based on information related to the stream transactions. The information related to the stream transactions provides the arbiter 12 with a future view of bus traffic on the bus interconnect 18. For example, stream transactions may have temporal and/or other priority parameters for completion provided by the requesting master devices 14(0-M). The arbiter 12 is configured to use this stream transaction information to evaluate bus arbitration policies for arbitrating the stream transactions. The arbiter 12 may also be configured to apply bus arbitration policies based on the evaluation. For example, the bus arbitration policy can be adjusted or altered for the stream transactions based on the stream transaction information, if necessary, for the arbiter to attempt to meet the parameters for completing the stream transactions.

In this regard, Figure 3 is a flowchart illustrating an exemplary process that can be performed by the arbiter 12 of Figure 1 to evaluate and apply a bus arbitration policy based on information related to a stream transaction. As illustrated therein, the controller 13 of the arbiter 12 receives a stream transaction on the bus interconnect 18 requested by a master device 14(0-M) (block 42). The request for the stream transaction includes stream transaction information. The controller 13 may apply an initial or default bus arbitration policy for arbitrating the stream transaction on the bus interconnect 18 (block 44). The controller 13 processes a next pending stream transaction (block 46). For example, multiple stream transactions may be pending to be completed by slave devices 16(0-N) coupled to the bus interconnect 18. The controller 13 then evaluates and/or applies a bus arbitration policy for the pending stream transaction based on the stream transaction information received from the master device 14(0-M) originally requesting the stream transaction (block 48). Different bus arbitration policies can be employed. The process repeats whereby the arbiter 12 can receive new stream transactions (block 42) and process pending stream transactions (block 46) either continuously, or at periodic intervals, dynamically, and/or on a stream transaction-by-stream transaction basis.

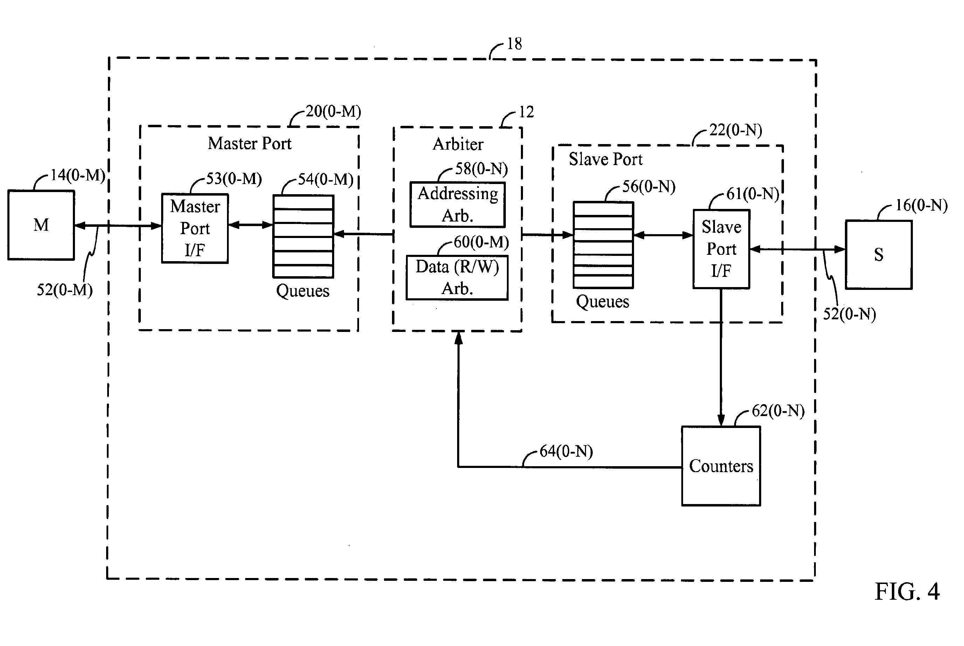

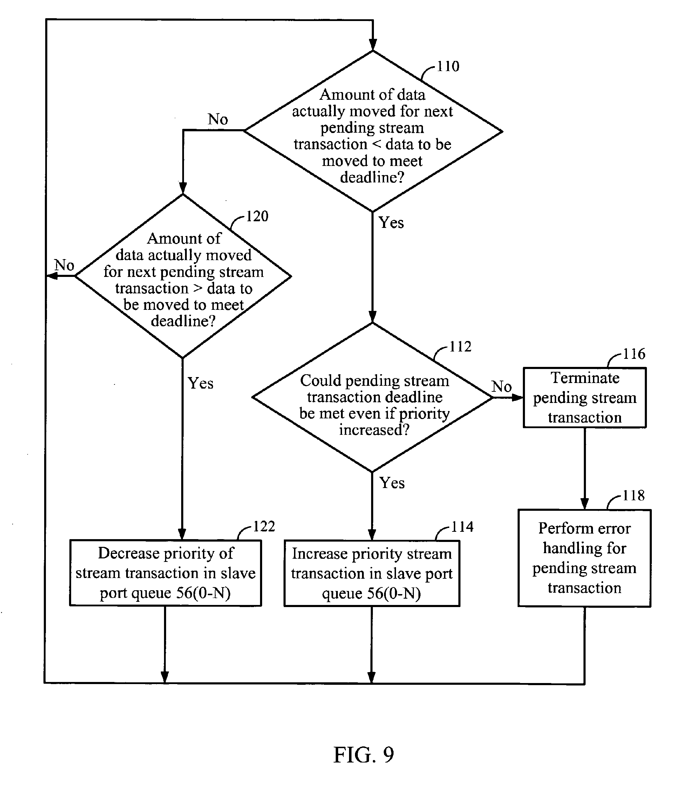

As will be discussed in more detail below with regard to the example bus arbitration policies applied by the arbiter 12 in Figures 9-11, the bus arbitration policy may be based on whether one or more stream transactions are pending and whether one or more stream transactions for a given slave device 16(0-N) have deadlines for completion. Before discussing further examples of evaluating and applying bus arbitration polices based on stream transaction information, Figures 4-8 are provided and discussed below. Figures 4-8 provide additional exemplary detail regarding embodiments of receiving bus transaction requests and related information, including stream transaction information, and arbitrating and routing of bus transactions from master devices 14(0-M) to slave devices 16(0-N).

Figure 4 illustrates a more detailed example of the arbiter 12 and routing resources in the bus interconnect 18 in Figure 1. The arbiter 12 arbitrates bus transactions, including stream transactions, between master devices 14(0-M) and slave devices 16(0-N) coupled to the bus interconnect 18. As illustrated in Figure 4, communications are supported between the master devices 14(0-M) and the bus interconnect 18 through master port buses 50(0-M) coupled to the master ports 20(0-M). Similarly, communications are supported between the slave devices 16(0-N) and the bus interconnect 18 through slave port buses 52(0-N) coupled to the slave ports 22(0-N). The bus interconnect 18 includes clocked circuitry, such as gates, latches, and registers as examples, that is configurable to set up a communication path between a desired master device 14(0-M) and desired slave device 16(0-N). For example as illustrated in Figure 4, exemplary components provided in the bus interconnect 18 are illustrated that are configurable to provide a communication path between one of the master devices 14(0-M) and one of the slave devices 16(0-N).

With continuing reference to Figure 4, the master ports 20(0-M) each include master port interfaces 53(0-M) connected to the master port buses 50(0-M) to receive bus transactions from the master devices 14(0-M). Master port queues 54(0-M) are provided to store bus transactions or commands that are provided to the arbiter 12 to arbitrate bus transactions between the master port queues 54(0-M) and slave port queues 56(0-N). The arbiter 12 may include a separate addressing arbiter 58(0-N) associated with the slave ports 22(0-N) to arbitrate bus transactions to the slave devices 16(0-N) and a data (read/write) arbiter 60(0-M) associated with the master ports 20(0-M) to arbitrate read data and write completion responses coming from the slave ports 22(0-N). The slave port queues 56(0-N) provide bus transactions to slave port interfaces 61(0-N) connected to the slave port buses 52(0-N). Note that although Figure 4 illustrates a communication path between one of the master ports 20(0-M) coupled to one of the master devices 14(0-M), and one of the slave ports 22(0-N) coupled to one of the slave devices 16(0-N), the arbiters 58(0-N), 60(0-M) provided in the bus interconnect 18 can be configured to arbitrate communication paths made possible by the bus interconnect 18 between master ports 20(0-M) and slave ports 22(0-N).

With continuing reference to Figure 4, counters 62(0-N) may also be provided for each slave port 22(0-N). The counters 62(0-N) count transactions completed by the slave port interfaces 61(0-N), respectively. The counters 62(0-M) can provide count information 64(0-N) to the arbiter 12, so that the arbiter 12 can monitor the completion progress of multiple beat transactions, including stream transactions. For example, the arbiter 12 can use the count information 64(0-N) to evaluate if completion of the stream transaction is ahead of schedule, on-schedule, or behind a deadline and apply a bus arbitration policy for stream transactions in response.

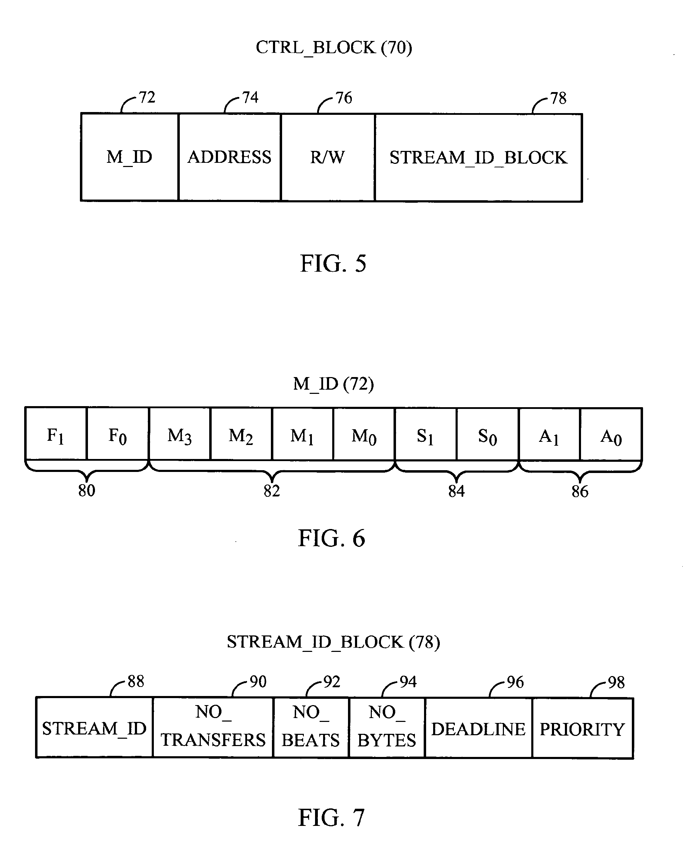

Examples of monitoring the progress of stream transactions with respect to evaluating and applying a bus arbitration policy for stream transactions is discussed in more detail below with regard to Figures 9-11. Before discussing these examples, examples of the master devices 14(0-M) providing bus transaction information to the bus interconnect 18 as part of bus transaction requests which can be used by the arbiter 12 to arbitrate the bus transactions, including stream transactions, is first discussed with respect to Figures 5-8 below. The bus transaction information allows the arbiter 12 to determine a bus arbitration policy for the bus transaction and to direct the bus transaction to the appropriate slave device 16(0-N). For stream transactions, the bus transaction information includes stream transaction information that is provided to the arbiter 12 to evaluate a bus arbitration policy based on information related to the stream transaction. In this regard, Figure 5 is a block diagram of an exemplary control block (CTRL_BLOCK) 70 for a bus protocol supported by the bus interconnect 18 of Figure 1 to allow a master device 14(0-M) requesting a bus transaction to provide information for the requested bus transaction, including stream transaction information.

With reference to Figure 5, the control block 70 contains control information that allows the arbiter 12 to perform transaction requests from the master devices 14(0-M). For example, the control block 70 includes a master identifier (M_ID) 72 that contains an identifier associated with a requestor of a bus transaction request to the arbiter 12. The arbiter 12 uses the master identifier 72 to determine which master device 14(0-M) is to receive responses received from a slave device 16(0-N). The address to be addressed in the slave device 16(0-N), such as if the slave device 16(0-N) is memory, is provided in an address field (ADDRESS) 74. If the bus transaction request is a memory access request, whether the memory access request is a read transaction or a write transaction is provided in a read/write field (R/W) 76. A stream identifier block (STREAM_ID_BLOCK) 78 is provided to provide stream transaction information for a bus transaction.

Figure 6 is a block diagram of an exemplary master identifier 72 that can be provided by a master device 14(0-M) in a bus transaction request to the bus interconnect 18. In this example, the master identifier 72 is a 10-bit word. The upper two bits (F₁, F₀) contain a fabric identifier 80 that allows for identification of four (4) distinct fabrics involved in a particular memory access request. The middle four bits (M₃, M₂, M₁, Mo) are a master device identifier 82 that identifies the master device 14(0-M). Thus, sixteen (16) unique master devices 14(0-M) are possible in this example. The next two bits (S₁, So) contain a sub-master device identifier 84 that identifies the sub-master device coupled to the master device 14(0-M) that is provided or applicable. Thus, four (4) unique sub-master devices are possible in this example. The lower two bits (A₁, A₀) contain an attribute identifier 86 that can be used to allow a master device 14(0-M) and/or a sub-master device to provide any attribute information desired. For example, the identification of a software process or thread could be provided in the attribute identifier 86 to allow a master device 14(0-M) and/or a sub-master device to identify the software process or thread responsible for a memory access request. Any other information desired could be included in the attribute identifier 86.

Figure 7 is a block diagram of an exemplary stream identifier block that may be used as the stream identifier block 78 in the control block 70 in Figure 5. The stream identifier block 78 contains exemplary information related to a stream transaction provided to the arbiter 12 in Figure 1 to allow the arbiter 12 to evaluate a bus arbitration policy to arbitrate stream transactions on the bus interconnect 18 based on information related to the stream transactions. A master device 14(0-M) provides the information in the stream identifier block 78 when requesting a stream transaction on the bus interconnect 18.

With continuing reference to Figure 7, the stream identifier block 78 includes a stream identifier field (STREAM-ID) 88 that identifies the stream transaction. A number of transfers field (NO_TRANSFERS) 90 provides the number of burst transfers associated with a stream transaction. A number of beats field (NO_BEATS) 92 provides the number of beats of data transfer to be performed for each burst transfer. A number of bytes field 94 (NO_BYTES) provides the number of bytes of data to be performed for each beat transfer. The number of bytes field 94 may be configurable or a fixed value depending on the architecture of the bus interconnect 18 and the slave devices 16(0-N).

If there is a deadline associated with a stream transaction, deadline information can be stored in a deadline field (DEADLINE) 96. For example, a master device 14(0-M) may request that a particular stream transaction be completed within a certain timing, which could be in terms of clock cycles, beats, or other relative or absolute timing. A priority field (PRIORITY) 98 is also provided to allow a priority to be associated with a stream transaction. The priority field 98 may be configured to be supplied and/or altered by the master device 14(0-M), the arbiter 12, or the slave device 16(0-N) depending on design. Any of this stream information may be used by the arbiter 12 to evaluate and apply a bus arbitration policy for a stream transaction to arbitrate the stream transaction.

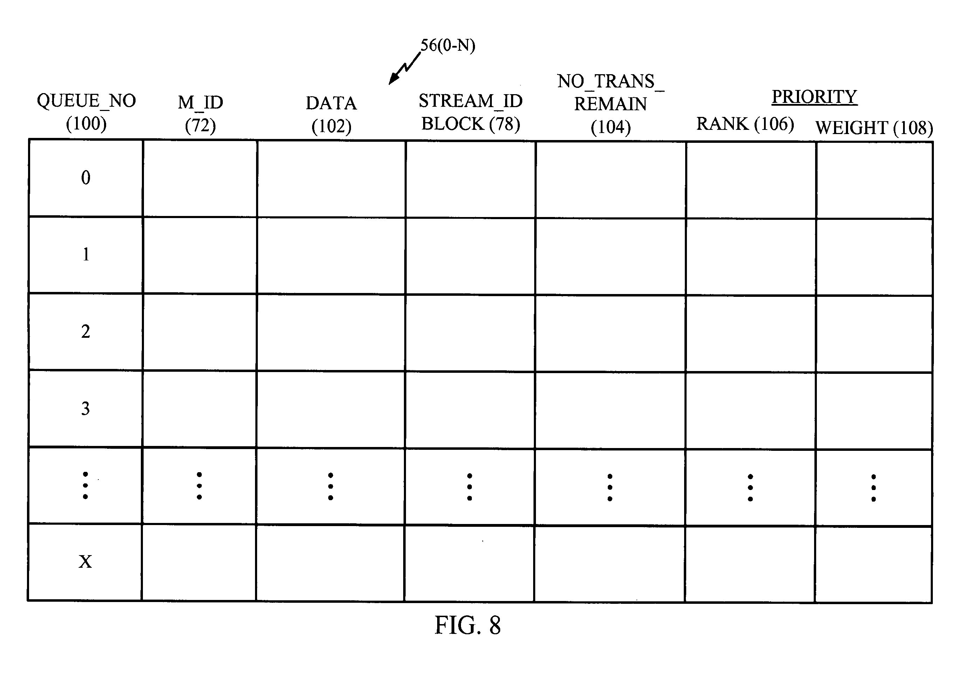

The arbiter 12 in Figure 1 receives bus transaction requests from the master devices 14(0-M) that include the control block 70 in Figure 5. As previously discussed, the bus transaction responses from the slave devices 16(0-N) in response to bus transaction requests, including stream transaction requests, are placed in the slave port queues 56(0-N). The arbiter 12 can evaluate a bus arbitration policy for stream transaction responses based on the stream transaction information for the stream transactions stored in the slave port queues 56(0-N). In this regard, Figure 8 is a diagram of the slave port queues 56(0-N) accessed by the arbiter 12 to support evaluating and applying a bus arbitration policy for arbitrating stream transactions based on the stream identifier block 78 in Figure 7. The slave port queues 56(0-N) may be provided in internal registers or other memory accessible by the arbiter 12 and internal or external to the bus interconnect 18.

As illustrated in Figure 8, the slave port queues 56(0-N) are comprised of a table configured to hold from zero (0) to "X" number of bus transaction request responses. A queue number field (QUEUE_NO) 100 is used to index the bus transaction responses stored in the slave port queues 56(0-N). Each bus transaction response in the slave port queues 56(0-N) in this example includes the master identifier field 72 (Figure 5) to identify the master device 14(0-M) to receive the bus transaction response. If the bus transaction request involves requesting data, the response data can be stored in a data field (DATA) 102. The stream identifier block 78 is also provided for each memory access request entry to store stream transaction information if the bus transaction request was a stream transaction.

A number of transfers remaining field (NO_TRANS_REMAIN) 104 is also provided to allow the arbiter 12 to determine the progress of a stream transaction to use for evaluating and applying bus arbitration policies for the bus transaction responses. Initially, the number of transfers remaining field 104 is set by the arbiter 12 based on the number of transfers field 90 provided for the stream transaction request in the number of transfers field 90 in the stream identifier block 78 in Figure 7. The counters 62(0-N) illustrated in Figure 4 count the number of completed transfers from the slave devices 16(0-N) for pending stream transactions to reduce the number of transfers remaining field 104. A rank field (RANK) 106 and a weight field (WEIGHT) 108 are also provided to allow a rank and/or weight to be used in a bus arbitration policy employed by the arbiter 12 to arbitrate between competing stream transaction responses. As a non-limiting example, the weight field 108 could be used in a weighted round robin bus arbitration policy. As another non-limiting example, the rank field 106 could be employed in a fixed priority bus arbitration policy. Other bus arbitration polices can be employed.

One of the parameters for stream transactions requested by master devices 14(0-M) to the bus interconnect 18 may be to complete the stream transaction within a deadline. As discussed above with regard to the stream identifier block 78 in Figure 7, deadline information may be included in the deadline field 96 to request that a stream transaction be completed within the deadline. In this regard, Figure 9 is a flowchart illustrating an exemplary process that could be applied by the arbiter 12 of Figure 1 to evaluate a bus arbitration policy for a pending stream transaction that has an associated deadline (a "pending deadlined stream transaction"). The process may be executed by the arbiter 12 periodically or on a continuous basis based on the pending stream transactions present in the slave port queues 56(0-N). For example, the arbiter 12 may perform the process in Figure 9 for each pending stream transaction in each slave port queue 56(0-N) based on the order of presence in the slave port queues 56(0-N).

With continuing reference to Figure 9, the arbiter 12 determines if the amount of data actually moved for the next pending deadlined stream transaction is less than the data to be moved in order to satisfy a deadline for the stream transaction (block 110). The arbiter 12 consults the number of transfers remaining field 104 in the slave port queues 56(0-N) in this example. If the amount of data actually moved for the next pending deadlined stream transaction is less than the data to be moved in order to satisfy the deadline, this means that the pending deadlined stream transaction is behind its deadline based on an expected rate of data transfer for the stream transaction. In this regard, the arbiter 12 determines if the pending deadlined stream transaction deadline could be met if the priority of the pending deadlined stream transaction was increased (block 112). If increasing the priority of the pending deadlined stream transaction could allow the pending stream transaction to satisfy its deadline, the arbiter 12 could increase the priority of the pending deadlined stream transaction in the slave port queue 56(0-N) (block 114). For example, increasing the priority of the pending deadlined stream transaction could include changing the priority in the slave port queue 56(0-N). For example, as illustrated in Figure 8, the rank field 106 and/or the weight field 108 could be updated to increase the priority of the pending deadlined stream transaction in a bus arbitration policy. As a non-limiting example, the rank field 106 could be used in a fixed priority bus arbitration policy. As another non-limiting example, the weight in the weight field 108 could be used in a weighted round robin bus arbitration policy.

If increasing the priority of the pending deadlined stream transaction would not allow the arbiter 12 to satisfy the deadline of the pending deadlined stream transaction, the arbiter 12 may terminate the pending deadlined stream transaction (block 116). In this regard, the arbiter 12 may remove the pending deadlined stream transaction from the slave port queue 56(0-N). The arbiter 12 may then perform an error handling process for the pending stream transaction to indicate the terminated status to the master device 14(0-M) that originally requested the deadlined stream transaction (block 118). Note that terminating and removing pending deadlined stream transactions can remove unnecessarily used bandwidth from the bus interconnect 18, thus increasing the performance of the bus interconnect 18.

If in the decision in block 110 the arbiter 12 determines that the amount of data actually moved for the pending deadlined stream transaction is not less than the data to be moved in order to satisfy the deadline for the pending deadlined stream transaction, the arbiter 12 determines if the amount of data actually moved for the pending deadlined stream transaction is greater than the data to be moved in order to satisfy the deadline (block 120). If so, the arbiter 12 may decrease the priority of the pending deadlined stream transaction (block 122), so that other pending bus transactions, including other pending stream transactions, can receive more processing time by the routing resources in the bus interconnect 18. If not, the arbiter 12 does not adjust the priority of the pending deadlined stream transaction and the next pending deadlined stream transaction is reviewed (block 110).

The process of reviewing pending deadlined stream transactions and adjusting the bus arbitration policy applied by the arbiter 12 in response can be performed on a continual basis. The process can also be performed at periodic intervals of completion for each pending deadlined stream transaction, also referred to as "stream watermarks" (e.g., at 25% of completion, 50% of completion, and 75% of completion, or other intervals). The number of stream watermarks employed can be provided based on the degree of granularity desired for consulting pending deadlined stream transactions and updating, if necessary, their bus arbitration policies accordingly.

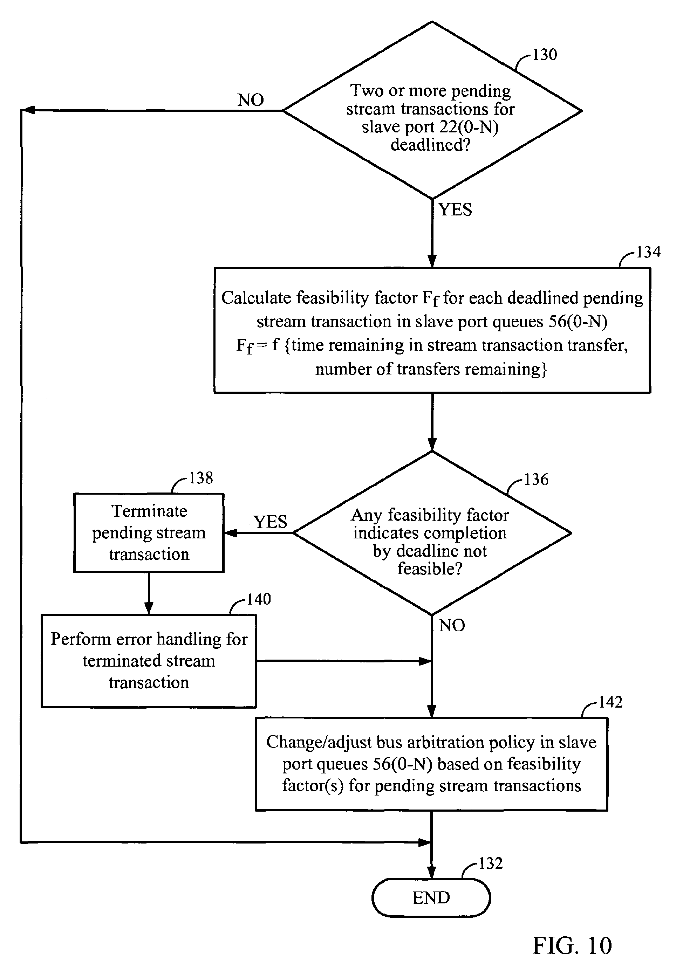

If only one pending stream transaction is deadlined for a given slave port 22(0-N), the arbiter 12 can give priority to the pending deadlined stream transaction per the exemplary process in Figure 9. However, if two or more pending stream transactions have deadlines for a given slave port 22(0-N), the arbiter 12 determines priority between the pending deadlined stream transactions. In this regard, Figure 10 is a flowchart illustrating an exemplary process that can be performed by the arbiter 12 to evaluate a bus arbitration policy when two or more pending stream transactions for a given slave port 22(0-N) have associated deadlines. The process in Figure 10 can be performed for each slave port queue 56(0-N) on a continual basis or at designated stream watermarks for pending deadlined stream transactions. As illustrated in Figure 10, the arbiter 12 determines for each slave port 22(0-N) if two or more pending stream transactions for a given slave port 22(0-N) have associated deadlines (block 130). If not, the process ends (block 132). If two or more pending stream transactions for a given slave port 22(0-N) have associated deadlines, the arbiter 12 in this example calculates a feasibility factor for each pending deadlined steam transaction in the slave port queues 56(0-N) (block 134).

A feasibility factor is used to determine the feasibility of the pending deadlined stream transaction be completed within its deadline. Any feasibility factor can be employed and can be an arbitrary calculation depending upon specific implementation. In this example, the feasibility factor is a function of the time remaining to complete the pending deadlined stream transaction and the number of transfers remaining for the pending deadlined stream transaction. For example, the number of transfers remaining field 104 in the slave port queues 56(0-N) is updated by the arbiter 12 as transfers are completed for pending deadlined stream transactions.

If the feasibility factor for a given pending deadlined stream transaction indicates that completion by the deadline is not possible (block 136), the arbiter 12 can terminate that pending stream transaction (block 138). An error handling process can be performed to indicate to the master device 14(0-M) requesting the terminated stream transaction that the stream transaction has been terminated prior to completion (block 140). If it is determined that it is feasible to complete the pending deadlined stream transaction (block 136), the arbiter 12 can change or adjust the bus arbitration policy for the pending deadlined stream transaction based on the feasibility factor (block 142). As non-limiting example, the arbiter 12 may change the bus arbitration policy from a weighted round robin bus arbitration policy to a fixed priority scheme, or vice versa. Once a given slave port 22(0-N) transitions from handling multiple pending deadlined stream transactions to only one pending deadlined stream transaction, the arbiter 12 can return to evaluating a bus arbitration policy to the pending deadlined stream transaction based on the process in Figure 9 as a non-limiting example.

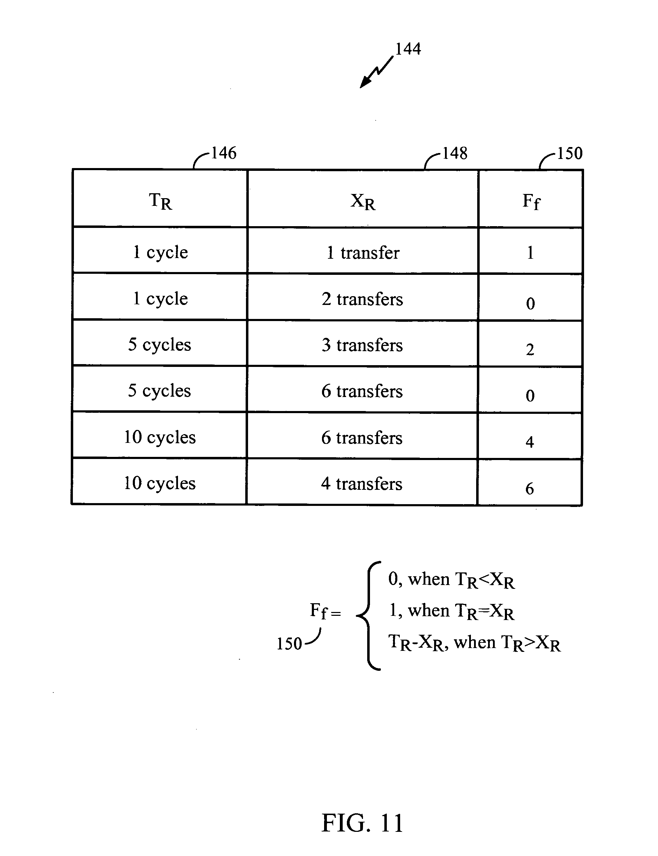

Figure 11 is a chart 144 to illustrate an exemplary feasibility factor that can be employed by the arbiter 12 to determine the feasibility of completing a pending deadlined stream transaction. In this example, six (6) pending deadlined stream transactions are shown, one in each row of the chart 144. The time remaining in terms of clock cycles for each pending deadlined stream transaction is shown in a time remaining (T_{R}) column 146. The number of transactions remaining for each pending deadlined stream transaction is shown in a number of transactions (X_{R}) column 148. The feasibility factor calculated for each pending deadlined stream transaction to determine the bus arbitration policy is shown in a feasibility factor (F_{f}) column 150.

With continuing reference to the example in Figure 11, the feasibility factor is determined as "0" if the time remaining (T_{R}) for a pending deadlined stream transaction is less than the number of transfers remaining (X_{R}) for the pending deadlined stream transaction. This means that completion of the pending deadlined stream transaction is not possible or feasible. The feasibility factor is determined as "1" if the time remaining (T_{R}) for a pending deadlined stream transaction is the same as the number of transfers remaining (X_{R}) for the pending deadlined stream transaction. In this scenario, completion of the pending deadlined stream transaction is still feasible. The feasibility factor is determined as T_{R}-X_{R} when the time remaining (T_{R}) for a pending deadlined stream transaction is greater than the number of transfers remaining (X_{R}) for the pending deadlined stream transaction.

Note that the arbiter 12 could be configured to calculate a feasibility factor when only one pending stream transaction for a given slave port 22(0-N) is deadlined, as provided in Figure 9. If the feasibility factor indiates that the pending deadlined stream transaction is not feasible to complete within the deadline, the arbiter 12 could terminate the pending deadlined stream transaction early. Terminating and removing pending deadlined stream transactions can remove unnecessarily used bandwidth from the bus interconnect 18 thus increasing the performance of the bus interconnect 18.

Note that whenever it is determined that a pending deadlined stream transaction cannot be completed or is not feasible to be completed prior to its deadline, in addition to terminating the stream transaction, other actions can be taken. For example, the termination of the stream transaction may be recorded in a syndrome register. As another non-limiting example, the termination of the stream transaction may be routed as an interrupt to one or more intelligent system agents in the system 10, including but not limited to the master devices 14(0-M), that can take appropriate action. A message communicated regarding a terminated stream transaction may be embedded by the arbiter 12 in a response channel.

Note that the bus arbitration policy examples herein may be provided singularly or any in combinations together as desired. Also, any or all of the bus arbitration policies disclosed herein may be carried out by circuits in the arbiter 12, which may or may not include the controller 13, and which may or may not execute software instructions in the computer-readable medium 15, as illustrated in Figure 1. Other bus arbitration policies can be used by the arbiter 12 to evaluate and/or apply a bus arbitration policy for stream transactions based on information related to the stream transactions.

The devices, systems, methods, and computer-readable mediums for arbitrating stream transactions based on information related to the stream transactions according to embodiments disclosed herein may be provided in or integrated into any processor-based device. Examples, without limitation, include a set top box, an entertainment unit, a navigation device, a communications device, a fixed location data unit, a mobile location data unit, a mobile phone, a cellular phone, a computer, a portable computer, a desktop computer, a personal digital assistant (PDA), a monitor, a computer monitor, a television, a tuner, a radio, a satellite radio, a music player, a digital music player, a portable music player, a digital video player, a video player, a digital video disc (DVD) player, and a portable digital video player.

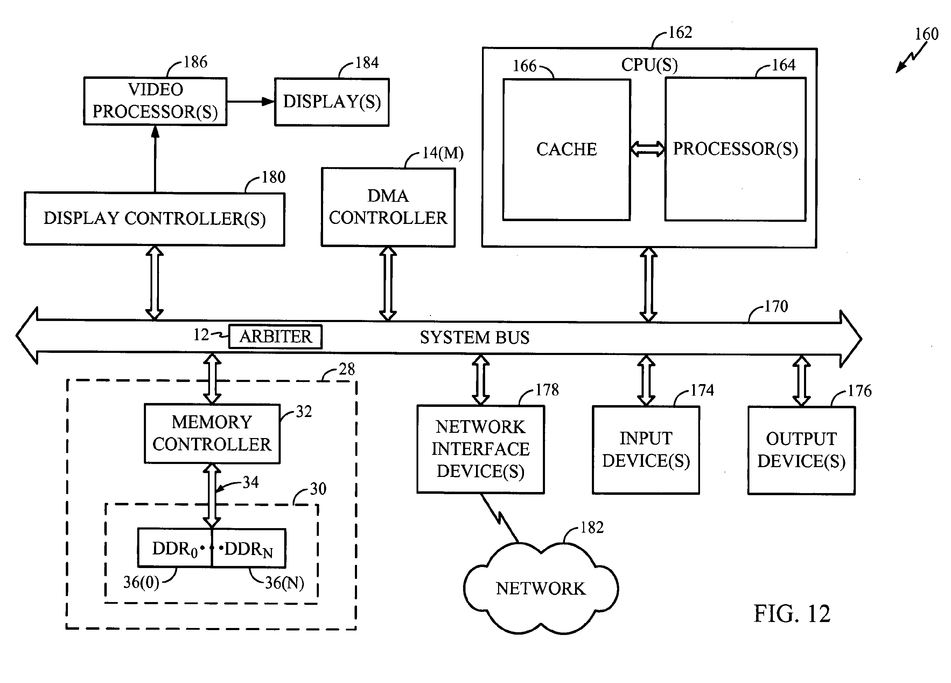

In this regard, Figure 12 illustrates an example of a processor-based system 160 that can employ components of the system 10 illustrated in Figure 1. In this example, the processor-based system 160 includes one or more central processing units (CPUs) 162, each including one or more processors 164. The CPU(s) 162 may be a master device. The CPU(s) 162 may have cache memory 166 coupled to the processor(s) 164 for rapid access to temporarily stored data. The CPU(s) 162 is coupled to a system bus 170 and intercouples master and slave devices included in the processor-based system 160. The system bus 170 may be a bus interconnect like the bus interconnect 18 illustrated in Figure 1. As is well known, the CPU(s) 162 communicates with these other devices by exchanging address, control, and data information over the system bus 170. For example, the CPU(s) 162 can communicate bus transaction requests to the memory controller 32 as an example of a slave device. Although not illustrated in Figure 12, multiple system buses 170 could be provided, wherein each system bus 170 constitutes a different fabric.

Other master and slave devices can be connected to the system bus 170. As illustrated in Figure 12, these devices can include the memory system 28, one or more input devices 174, one or more output devices 176, one or more network interface devices 178, and one or more display controllers 180, as examples. The input device(s) 174 can include any type of input device, including but not limited to input keys, switches, voice processors, etc. The output device(s) 176 can include any type of output device, including but not limited to audio, video, other visual indicators, etc. The network interface device(s) 178 can be any devices configured to allow exchange of data to and from a network 182. The network 182 can be any type of network, including but not limited to a wired or wireless network, private or public network, a local area network (LAN), a wide local area network (WLAN), and the Internet. The network interface device(s) 178 can be configured to support any type of communication protocol desired. The memory system 28 can include one or more memory units 36(0-A). The arbiter 12 may be provided between the system bus 170 and master and slave devices coupled to the system bus 170, such as for example, the memory units 36(0-A) provided in the memory system 28.

The CPU 162 may also be configured to access the display controller(s) 180 over the system bus 170 to control information sent to one or more displays 184. The display controller(s) 180 sends information to the display(s) 184 to be displayed via one or more video processors 186, which process the information to be displayed into a format suitable for the display(s) 184. The display(s) 184 can include any type of display, including but not limited to a cathode ray tube (CRT), a liquid crystal display (LCD), a plasma display, etc.

The CPU(s) 162 and the display controller(s) 180 may act as master devices to make memory access requests to the arbiter 12 over the system bus 170. Different threads within the CPU(s) 162 and the display controller(s) 180 may make requests to the arbiter 12. The CPU(s) 162 and the display controller(s) 180 may provide the master identifier 72 to the arbiter 12, as previously described, as part of a bus transaction request.

Any type of master devices 14(0-M) and slave devices 16(0-N) may be employed in the processor-based system 160 to request and respond to stream transactions. As a non-limiting example, if the master device 14(0-M) requesting a deadlined stream transaction were the DMA controller 14(M) as illustrated in Figure 12, the DMA controller 14(M) could parse descriptors with any necessary deadline parameter(s) provided in a descriptor field. The description setup by the CPU 162 could be afforded a deadline parameter. The DMA controller 14(M) could later parse this deadline parameter and broadcast such deadline as part of a new stream transaction request over the system bus 170. In this regard as an example, the deadline parameter(s) could be provided by the DMA controller 14(M) in the deadline field 96 in the stream identifier block 78 in Figure 7. Through the course of the stream transaction transfer, the arbiter 12 can dynamically adjust the bus arbitration policy for the stream transaction to attempt to achieve the deadline conveyed by the descriptor.

Those of skill in the art would further appreciate that the various illustrative logical blocks, modules, circuits, and algorithms described in connection with the embodiments disclosed herein may be implemented as electronic hardware, instructions stored in memory or in another computer-readable medium and executed by a processor or other processing device, or combinations of both. The arbiter, master devices, sub-master devices, and slave devices described herein may be employed in any circuit, hardware component, integrated circuit (IC), or IC chip, as examples. Memory disclosed herein may be any type and size of memory and may be configured to store any type of information desired. To clearly illustrate this interchangeability, various illustrative components, blocks, modules, circuits, and steps have been described above generally in terms of their functionality. How such functionality is implemented depends upon the particular application, design choices, and/or design constraints imposed on the overall system. Skilled artisans may implement the described functionality in varying ways for each particular application, but such implementation decisions should not be interpreted as causing a departure from the scope of the present invention.

The various illustrative logical blocks, modules, and circuits described in connection with the embodiments disclosed herein may be implemented or performed with a processor, a DSP, an Application Specific Integrated Circuit (ASIC), an FPGA or other programmable logic device, discrete gate or transistor logic, discrete hardware components, or any combination thereof designed to perform the functions described herein. A processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The embodiments disclosed herein may be embodied in hardware and in instructions that are stored in hardware, and may reside, for example, in Random Access Memory (RAM), flash memory, Read Only Memory (ROM), Electrically Programmable ROM (EPROM), Electrically Erasable Programmable ROM (EEPROM), registers, hard disk, a removable disk, a CD-ROM, or any other form of computer readable medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a remote station. In the alternative, the processor and the storage medium may reside as discrete components in a remote station, base station, or server.

It is also noted that the operational steps described in any of the exemplary embodiments herein are described to provide examples and discussion. The operations described may be performed in numerous different sequences other than the illustrated sequences. Furthermore, operations described in a single operational step may actually be performed in a number of different steps. Additionally, one or more operational steps discussed in the exemplary embodiments may be combined. It is to be understood that the operational steps illustrated in the flow chart diagrams may be subject to numerous different modifications as will be readily apparent to one of skill in the art. Those of skill in the art would also understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

## Claims

1. A bus arbiter (12), **characterized by**:
a controller (13) configured to receive requests to perform a plurality of pending stream transactions (38) on a bus (18) from devices (14) coupled to the bus (18), evaluate a bus arbitration policy to arbitrate the plurality of pending stream transactions on the bus (18) based on deadlines (96) associated with the plurality of pending stream transactions (38), and determine whether to alter the bus arbitration policy based on the deadlines (96) associated with the plurality of pending stream transactions (38).

2. The bus arbiter of claim 1, wherein the controller is further configured to change the bus arbitration policy from a weighted round robin bus arbitration policy to a fixed priority scheme to alter the bus arbitration policy, or to change the bus arbitration policy from the fixed priority scheme to the weighted round robin bus arbitration policy to alter the bus arbitration policy.

3. The bus arbiter of claim 1, wherein the controller is further configured to evaluate the bus arbitration policy to arbitrate the plurality of pending stream transactions based on one or more of a master identifier, a stream identifier, or a priority associated with the pending stream transaction.

4. The bus arbiter of claim 1, wherein the bus arbitration policy comprises a weighted round robin bus arbitration policy or a fixed priority scheme.

5. The bus arbiter of claim 4, wherein the requests are received from master devices and wherein the controller is configured to access responses to the requests from slave devices, wherein each response includes a weight field used in the weighted round robin bus arbitration policy, or wherein each response includes a rank field used in the fixed priority scheme.

6. The bus arbiter of claim 1, wherein the controller is further configured to continuously evaluate the bus arbitration policy based on the deadlines associated with the plurality of pending stream transactions while the deadlines remains pending.

7. The bus arbiter of claim 1, wherein the controller is further configured to alter priorities associated with the plurality of pending stream transactions to alter the bus arbitration policy and complete the plurality of pending stream transactions within the deadlines.

8. The bus arbiter of claim 1, wherein the controller is further configured to periodically evaluate the bus arbitration policy based on the deadlines associated with the plurality of pending stream transactions while the deadlines remains pending.

9. The bus arbiter of claim 7, wherein the controller is further configured to decrease the priority associated with one of the plurality of pending stream transaction if a first amount of data moved for that pending stream transaction is not less than a second amount of data to move in order to complete that pending stream transaction within its deadline, or
wherein the controller is further configured to increase the priority associated with one of the pending stream transaction if the first amount of data moved for that pending stream transaction is less than the second amount of data to move in order to complete that pending stream transaction within its deadline, or
wherein the controller is further configured to terminate one of the plurality of pending stream transactions if altering the priority associated with that pending stream transaction would not complete that pending stream transaction within the deadline.

10. The bus arbiter of claim 1, wherein the controller is further configured to determine a feasibility factor for each of the plurality of pending stream transactions to evaluate the bus arbitration policy for the plurality of pending stream transactions.

11. The bus arbiter of claim 10, wherein the controller is further configured to adjust priorities associated with the plurality of pending stream transactions based on feasibility factors determined for each of the plurality of pending stream transactions.

12. The bus arbiter of claim 10, wherein the controller is further configured to determine the feasibility factor to complete one of the plurality of the pending stream transactions within the deadlines based on time remaining to complete the one of the plurality of pending stream transactions and a number of transfers remaining for the one of the plurality of pending stream transaction.

13. A method of arbitrating stream transactions communicated on a bus (18), **characterized by**:
receiving requests to perform a plurality of pending stream transactions (38) on a bus (18) from devices (14) coupled to the bus (18);
evaluating, at a controller (13) configured to arbitrate stream transactions (38) on the bus (18), a bus arbitration policy to arbitrate the plurality of pending stream transactions (38) on the bus (18) based on deadlines (96) associated with the plurality of pending stream transactions (38); and
determining, at the controller (13), whether to alter the bus arbitration policy based on the deadlines (96) associated with the plurality of pending stream transactions (38).

14. A computer-readable medium having stored thereon computer executable instructions, the computer executable instructions **characterized by** causing a bus arbiter (12) to:
receive requests to perform a plurality of pending stream transactions (38) on a bus (18) from devices (14) coupled to the bus (18); and
evaluate a bus arbitration policy to arbitrate the plurality of pending stream transactions (38) on the bus (18) based on deadlines (96) associated with the plurality of pending stream transactions (38); and
determine whether to alter the bus arbitration policy based on the deadlines (96) associated with the plurality of pending stream transactions (38).

## Patentansprüche

1. Ein Busarbiter bzw. Busvermittlungselement (12), das **gekennzeichnet ist durch**:
eine Steuervorrichtung bzw. einen Controller (13), der konfiguriert ist zum Empfangen von Anfragen zum Durchführen einer Vielzahl von anstehenden Strom- bzw. Stream-Transaktionen (38) auf einem Bus (18) von Einrichtungen (14), die an den Bus (18) gekoppelt sind, zum Evaluieren einer Busvermittlungs- bzw. Busarbitrierungsstrategie zum Vermitteln zwischen der Vielzahl anstehender Stream-Transaktionen auf dem Bus (18) basierend auf Fristen (96), die mit der Vielzahl anstehender Stream-Transaktionen (38) assoziiert sind, und zum Bestimmen ob die Busvermittlungsstrategie modifiziert werden soll basierend auf den Fristen (96), die mit der Vielzahl von anstehenden Stream-Transaktionen (38) assoziiert sind.

2. Busarbiter nach Anspruch 1, wobei der Controller weiter konfiguriert ist zum Ändern der Busvermittlungsstrategie von einer gewichteten Rundlauf- bzw. Round-Robin-Busvermittlungsstrategie zu einem Schema mit festgelegter Priorität zum Modifizieren der Busvermittlungsstrategie, oder zum Ändern der Busvermittlungsstrategie von dem Schema mit festgelegter Priorität zu der gewichteten Round-Robin-Busvermittlungsstrategie zum Modifizieren der Busvermittlungsstrategie.

3. Busarbiter nach Anspruch 1, wobei der Controller weiter konfiguriert ist zum Evaluieren der Busvermittlungsstrategie zum Vermitteln zwischen der Vielzahl von anstehenden Stream-Transaktionen basierend auf einem oder mehreren Masteridentifikatoren, einem Stream-Identifikator oder einer Priorität, die mit der anstehenden Stream-Transaktion assoziiert ist.

4. Busarbiter nach Anspruch 1, wobei die Busvermittlungsstrategie eine gewichtete Round-Robin-Busvermittlungsstrategie oder eine Schema mit festgelegter Priorität aufweist.

5. Busarbiter nach Anspruch 4, wobei die Anfragen von Mastereinrichtungen empfangen werden und wobei der Controller konfiguriert ist zum Zugreifen auf Antworten auf die Anfragen von den Slave-Einrichtungen, wobei jede Antwort ein Gewichtungsfeld beinhaltet, das bei der gewichteten Round-Robin-Busvermittlungsstrategie genutzt wird, oder wobei jede Antwort ein Rangfeld beinhaltet, das bei dem Schema mit festgelegter Priorität genutzt wird.

6. Busarbiter nach Anspruch 1, wobei der Controller weiter konfiguriert ist zum kontinuierlichen Evaluieren der Busvermittlungsstrategie basierend auf den Fristen, die mit der Vielzahl anstehender Stream-Transaktionen assoziiert sind, während die Fristen weiter anstehen.

7. Busarbiter nach Anspruch 1, wobei der Controller weiter konfiguriert ist zum Modifizieren von Prioritäten, die mit der Vielzahl anstehender Stream-Transaktionen assoziiert sind, zum Modifizieren der Busvermittlungsstrategie und zum Abschließen der Vielzahl anstehender Stream-Transaktionen innerhalb der Fristen.

8. Busarbiter nach Anspruch 1, wobei der Controller weiter konfiguriert ist zum periodischen Evaluieren der Busvermittlungsstrategie basierend auf den Fristen, die mit der Vielzahl von anstehenden Stream-Transaktionen assoziiert sind, während die Fristen weiter anstehen.

9. Busarbiter nach Anspruch 7, wobei der Controller weiter konfiguriert ist zum Verringern der Priorität, die mit einer der Vielzahl von anstehenden Stream-Transaktionen assoziiert ist, wenn eine erste Menge an Daten, die für diese anstehende Stream-Transaktion bewegt wurde, nicht geringer ist als eine zweite Menge an Daten, die bewegt werden muss, um diese anstehende Stream-Transaktion innerhalb ihrer Frist abzuschließen, oder
wobei der Controller weiter konfiguriert ist zum Erhöhen der Priorität, die mit einer der anstehenden Stream-Transaktionen assoziiert ist, wenn die erste Menge an Daten, die für diese anstehende Stream-Transaktion bewegt wurde geringer ist als die zweite Menge an Daten, die bewegt werden muss, um diese anstehende Stream-Transaktion innerhalb ihrer Frist abzuschließen, oder
wobei der Controller weiter konfiguriert ist zum Beenden einer der Vielzahl von anstehenden Stream-Transaktionen, wenn Modifizieren der Priorität, die mit der anstehenden Stream-Transaktion assoziiert ist, diese anstehende Stream-Transaktion nicht innerhalb der Frist abschließen würde.

10. Busarbiter nach Anspruch 1, wobei der Controller weiter konfiguriert ist zum Bestimmen eines Machbarkeitsfaktors für jede der Vielzahl von anstehenden Stream-Transaktionen zum Evaluieren der Busvermittlungsstrategie für die Vielzahl anstehender Stream-Transaktionen.

11. Busarbiter nach Anspruch 10, wobei der Controller weiter konfiguriert ist zum Einstellen bzw. Anpassen von Prioritäten, die mit der Vielzahl von anstehenden Stream-Transaktionen assoziiert sind basierend auf Machbarkeitsfaktoren, die für jede der Vielzahl von anstehenden Stream-Transaktionen bestimmt wurden.

12. Busarbiter nach Anspruch 10, wobei der Controller weiter konfiguriert ist zum Bestimmen des Machbarkeitsfaktors zum Abschließen einer der Vielzahl von anstehenden Stream-Transaktionen innerhalb der Fristen basierend auf der Zeit die verbleibt, um die eine der Vielzahl von anstehenden Stream-Transaktionen abzuschließen, und auf einer Anzahl von Transfers bzw. Übertragungen, die für die eine der Vielzahl von anstehenden Stream-Transaktionen verbleibt.

13. Ein Verfahren zum Arbitrieren bzw. Vermitteln zwischen Stream-Transaktionen, die auf einem Bus (18) kommuniziert bzw. übermittelt werden, **gekennzeichnet durch**:
Empfangen von Anfragen zum Durchführen einer Vielzahl von anstehenden Strom- bzw. Stream-Transaktionen (38) auf einem Bus (18) von Vorrichtungen (14), die an den Bus (18) gekoppelt sind;
Evaluieren, an einem Controller (13), der konfiguriert ist, um Stream-Transaktionen (38) auf dem Bus (18) zu vermitteln, einer Busvermittlungsbzw. Busarbitrierungsstrategie zum Vermitteln zwischen der Vielzahl anstehender Stream-Transaktionen (38) auf dem Bus (18) basierend auf Fristen (96), die mit der Vielzahl von anstehenden Stream-Transaktionen (38) assoziiert sind; und
Bestimmen, an dem Controller (13), ob die Busvermittlungsstrategie basierend auf den Fristen (96), die mit der Vielzahl von anstehenden Stream-Transaktionen (38) assoziiert sind, modifiziert werden soll.

14. Ein computerlesbares Medium mit darauf gespeicherten, von einem Computer ausführbaren Instruktionen, wobei die von einem Computer ausführbaren Instruktionen **dadurch gekennzeichnet sind, dass** sie einen Busarbiter bzw. Busvermittlungselement (12) veranlassen zum:
Empfangen von Anfragen zum Durchführen einer Vielzahl von anstehenden Stream-Transaktionen (38) auf einem Bus (18) von Einrichtungen (14), die an den Bus (18) gekoppelt sind; und
Evaluieren einer Busvermittlungs- bzw. Busarbitrierungsstrategie zum Vermitteln zwischen der Vielzahl anstehender Stream-Transaktionen (38) auf dem Bus (18) basierend auf Fristen (96), die mit der Vielzahl von anstehenden Stream-Transaktionen (38) assoziiert sind; und
Bestimmen ob die Busvermittlungsstrategie basierend auf den Fristen (96), die mit der Vielzahl von anstehenden Stream-Transaktionen (38) assoziiert sind, modifiziert werden soll.

## Revendications

1. Arbitre de bus (12), **caractérisé par** :
un contrôleur (13) configuré pour recevoir des requêtes demandant d'effectuer une pluralité de transactions de flux en attente (38) sur un bus (18) en provenance de dispositifs (14) couplés au bus (18), évaluer une politique d'arbitrage de bus servant à arbitrer la pluralité de transactions de flux en attente sur le bus (18) sur la base d'échéances (96) associées à la pluralité de transactions de flux en attente (38), et déterminer de modifier ou non la politique d'arbitrage de bus sur la base des échéances (96) associées à la pluralité de transactions de flux en attente (38).

2. Arbitre de bus selon la revendication 1, dans lequel le contrôleur est en outre configuré pour changer la politique d'arbitrage de bus d'une politique d'arbitrage de bus à tourniquet pondéré à une technique à priorités fixes afin de modifier la politique d'arbitrage de bus, ou pour changer la politique d'arbitrage de bus de la technique à priorités fixes à la politique d'arbitrage de bus à tourniquet pondéré afin de modifier la politique d'arbitrage de bus.

3. Arbitre de bus selon la revendication 1, dans lequel le contrôleur est en outre configuré pour évaluer la politique d'arbitrage de bus servant à arbitrer la pluralité de transactions de flux en attente sur la base d'un ou plusieurs éléments parmi un identificateur de maître, un identificateur de flux et une priorité associée à la transaction de flux en attente.

4. Arbitre de bus selon la revendication 1, dans lequel la politique d'arbitrage de bus comprend une politique d'arbitrage de bus à tourniquet pondéré ou une technique à priorités fixes.

5. Arbitre de bus selon la revendication 4, dans lequel les requêtes sont reçues en provenance de dispositifs maîtres et dans lequel le contrôleur est configuré pour accéder à des réponses aux requêtes en provenance de dispositifs esclaves, chaque réponse comprenant un champ de poids utilisé dans la politique d'arbitrage de bus à tourniquet pondéré, ou chaque réponse comprenant un champ de rang utilisé dans la technique à priorités fixes.

6. Arbitre de bus selon la revendication 1, dans lequel le contrôleur est en outre configuré pour évaluer en continu la politique d'arbitrage de bus sur la base des échéances associées à la pluralité de transactions de flux en attente tant que les échéances restent en attente.

7. Arbitre de bus selon la revendication 1, dans lequel le contrôleur est en outre configuré pour modifier des priorités associées à la pluralité de transactions de flux en attente afin de modifier la politique d'arbitrage de bus et d'achever la pluralité de transactions de flux en attente avant les échéances.

8. Arbitre de bus selon la revendication 1, dans lequel le contrôleur est en outre configuré pour évaluer périodiquement la politique d'arbitrage de bus sur la base des échéances associées à la pluralité de transactions de flux en attente tant que les échéances restent en attente.

9. Arbitre de bus selon la revendication 7, dans lequel le contrôleur est en outre configuré pour diminuer la priorité associée à l'une des transactions de flux en attente si une première quantité de données déplacées pour cette transaction de flux en attente n'est pas inférieure à une seconde quantité de données à déplacer de manière à achever cette transaction de flux en attente avant son échéance, ou
dans lequel le contrôleur est en outre configuré pour augmenter la priorité associée à l'une des transactions de flux en attente si la première quantité de données déplacées pour cette transaction de flux en attente est inférieure à la seconde quantité de données à déplacer de manière à achever cette transaction de flux en attente avant son échéance, ou
dans lequel le contrôleur est en outre configuré pour mettre fin à l'une des transactions de flux en attente si modifier la priorité associée à cette transaction de flux en attente ne permettrait pas d'achever cette transaction de flux en attente avant l'échéance.

10. Arbitre de bus selon la revendication 1, dans lequel le contrôleur est en outre configuré pour déterminer un facteur de faisabilité pour chacune des transactions de flux en attente afin d'évaluer la politique d'arbitrage de flux pour la pluralité de transactions de flux en attente.

11. Arbitre de bus selon la revendication 10, dans lequel le contrôleur est en outre configuré pour ajuster des priorités associées à la pluralité de transactions de flux en attente sur la base de facteurs de faisabilité déterminés pour chacune des transactions de flux en attente.

12. Arbitre de bus selon la revendication 10, dans lequel le contrôleur est en outre configuré pour déterminer le facteur de faisabilité d'achèvement de l'une des transactions de flux en attente avant les échéances sur la base d'un temps restant pour achever la transaction de flux en attente en question et d'un nombre de transferts restants pour la transaction de flux en attente en question.

13. Procédé d'arbitrage de transactions de flux communiquées sur un bus (18), **caractérisé par** :
la réception de requêtes demandant d'effectuer une pluralité de transactions de flux en attente (38) sur un bus (18) en provenance de dispositifs (14) couplés au bus (18) ;
l'évaluation, au niveau d'un contrôleur (13) configuré pour arbitrer des transactions de flux (38) sur le bus (18), d'une politique d'arbitrage de bus servant à arbitrer la pluralité de transactions de flux en attente (38) sur le bus (18) sur la base d'échéances (96) associées à la pluralité de transactions de flux en attente (38) ; et
la détermination, au niveau du contrôleur (13), de modifier ou non la politique d'arbitrage de bus sur la base des échéances (96) associées à la pluralité de transactions de flux en attente (38).

14. Support lisible par ordinateur sur lequel sont stockées des instructions exécutables par ordinateur, les instructions exécutables par ordinateur étant **caractérisées en ce qu'**elles amènent un arbitre de bus (12) à :
recevoir des requêtes demandant d'effectuer une pluralité de transactions de flux en attente (38) sur un bus (18) en provenance de dispositifs (14) couplés au bus (18) ; et
évaluer une politique d'arbitrage de bus servant à arbitrer la pluralité de transactions de flux en attente (38) sur le bus (18) sur la base d'échéances (96) associées à la pluralité de transactions de flux en attente (38) ; et
déterminer de modifier ou non la politique d'arbitrage de bus sur la base des échéances (96) associées à la pluralité de transactions de flux en attente (38).
